# EUROPEAN PATENT APPLICATION

(11) **EP 4 581 924 A1**
(43) Date of publication of application: **09.07.2025**
(21) Application number: 24150637.7
(22) Date of filing: 08.01.2024
(51) Int. Cl.: A01G 18/70

(54) **MUSHROOM PICKING SYSTEM, USE THEREOF AND METHOD OF PICKING MUSHROOMS**

(71) Applicant: TLT Automation, 8770 Ingelmunster (BE)
(72) Inventor: TACK, Jan-Baptist, 8770 Ingelmunster (BE); TACK, Jan-Emiel, 8770 Ingelmunster (BE); LAPIERRE, Stefaan, 8770 Ingelmunster (BE)
(74) Representative: BiiP bv

(57) **Abstract**

A mushroom picking system comprising:

(a) a picking tool (1) comprising a gripper (5) for engaging a mushroom cap;

(b) a cleaning unit (2) for periodically cleaning the gripper (5), wherein the gripper (5) comprises a wall part made of a flexible polymeric material defining a surface (10) for engaging a mushroom cap, characterized in that the cleaning unit (2) comprises a blade (13) defining a scraping edge (13, 14) configured to engage with said engaging surface (10) of the gripper (5).

## Description

### FIELD OF THE INVENTION

The present invention concerns a mushroom picking system suitable for transferring mushrooms from a conveyor to a package of between conveyors, in particular for cultivated mushrooms (*Agaricus bisporus sp.)* or other types of mushrooms with a convex cap.

### BACKGROUND TO THE INVENTION

The packaging of mushrooms becomes more and more automated, whereby mushrooms are entering a packaging station on a conveyor and are transferred from that conveyor to a package by means of a picking robot.

Mushroom conveyor belts generally comprising holes or an elongated opening wherein the stipe of the mushrooms fit such that the mushrooms are positioned on the conveyor belt with their cap facing upward. With such positioning it is preferred to pick up mushrooms by their cap. It is generally known that the cap of mushrooms is to be handled gently as it is prone to damage in case of rough handling or in case too much pressure is applied thereon.

To achieve gentle handling of the cup, it is known to use mushroom grippers having a suction cup comprising a wall part made of a flexible polymeric material defining a central channel extending in a longitudinal direction X, a proximal end portion and a distal end portion, with the proximal end portion of the suction cup defining a connector for connection of the suction cup to a shaft of the picking tool and with a distal end portion defining a surface for engaging a mushroom cap. The channel defined by the suction cup is fluidly connected to a vacuum system for creating a partial vacuum in the channel upon engagement of the suction cup with a mushroom cap.

The partial vacuum to be created between the suction cup and the mushroom cap is preferably as gentle as possible to minimize the pressure exerted on the mushroom cap and minimize the risk of damaging said cap.

In use however, scales from the mushroom cap tend to stick to the surface of the suction cup designed for engaging with a mushroom cap. The accumulation of scales, inhibits a good, tight contact between the suction cup and a mushroom cap, such that in order to pick up a mushroom the partial vacuum to be created between the suction cup and the mushroom cap is to be higher than in case no scales or other particles would be present on the engaging surface of the suction cup. A higher partial vacuum, results in an increased pressure exerted on the mushroom cap by the suction cup and thus an increased risk of damaging the mushroom.

In order to prevent scales accumulating on the engaging surface of the suction cup, it is known to periodically clean the engaging surface of the suction cup with a brush. As scales can stick rather well to the engaging surface, sufficient force is to be applied by the brush on the suction cup during rubbing to effectively clean the engaging surface. Such forceful rubbing of the engaging surface of the suction cup with a brush potentially damages the engaging surface, resulting in grooves being created in the engaging surface that inhibit a good, tight contact between the suction cup and a mushroom cap.

From the above it is clear there remains a market need for a reliable picking system allowing picking mushrooms with a minimal pressure on the mushroom cap and yet improving longevity of the picking system and its components.

### BRIEF SUMMARY OF THE INVENTION

The present invention addresses the above market need and provides for a mushroom picking system as defined in the appended independent product claim, said mushroom picking device comprising:
(a) a picking tool comprising a gripper for engaging a mushroom cap;
(b) a cleaning unit for periodically cleaning the gripper,
wherein the gripper comprises a wall part made of a flexible polymeric material defining a surface for engaging a mushroom cap, **characterized in that** the cleaning unit comprises a blade defining a scraping edge configured to engage with said engaging surface of the gripper.

The present invention also relates to a method for picking mushrooms as defined in the appended independent method claim, said method comprising the steps of:
(a) Executing a picking cycle comprising:
   i. Engaging a gripper of a picking tool with a mushroom cap at a pick-up spot;
   ii. Applying a partial vacuum between the gripper and the mushroom cap;
   iii. Releasing the concerned mushroom from the gripper at a drop-off spot;
(b) Repeating said picking cycle (a) for a different mushroom;
(c) Periodically cleaning the gripper at a cleaning unit in between two subsequent picking cycles, wherein the gripper comprises a wall part made of a flexible polymeric material defining a surface for engaging a mushroom cap, **characterized in that** the cleaning unit comprises a blade defining a scraping edge configured to engage with said engaging surface of the gripper.

The present invention also concerns the use of a system as described above for picking mushrooms.

### SUMMARY OF THE INVENTION

Preferred embodiments and method features of the present invention are disclosed in the appended dependent claims.

### BRIEF DESCRIPTION OF THE APPENDED FIGURES

Fig. 1 schematically illustrates a picking according to the present invention;
Fig. 2 schematically illustrates a gripper applicable for the present invention;
Fig. 3 illustrates a cleaning unit applicable for the present invention;
Fig. 4 illustrates a cleaning tool applicable for the present invention;
Fig. 5 illustrates several steps of a picking cycle that is part of a method according to the present invention.

### DETAILED DESCRIPTION

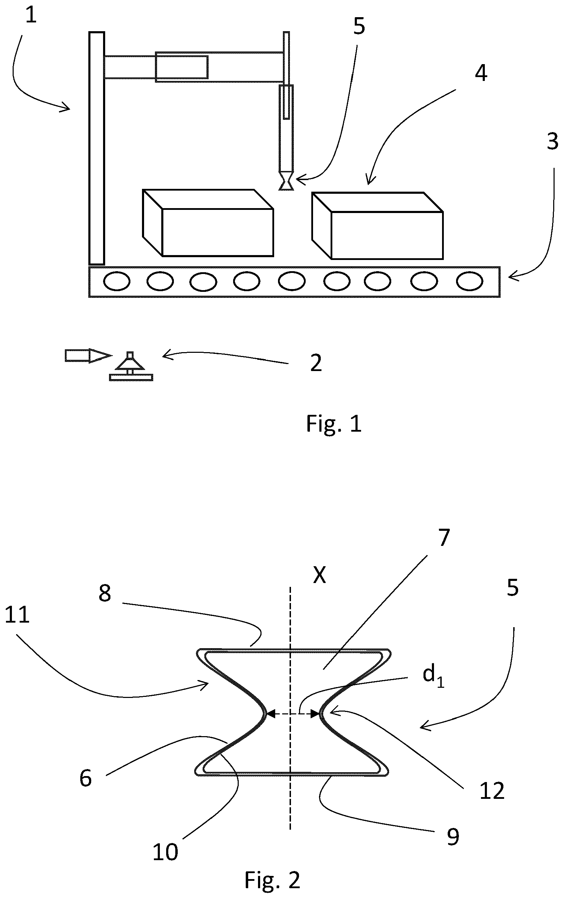

As represented in Fig. 1, a mushroom picking system according to the present invention comprises both a picking tool 1 and a cleaning unit 2. In the particular set-up shown in Fig. 1, the picking system is applied for transferring mushrooms from a conveyor 3 to a packaging unit 4. The conveyor 3 and packaging unit 4 are just shown as an example as a mushroom picking system of the present invention can also be used to transfer mushrooms between other units as for example between a plate designed for cutting the stipes from the mushrooms to a box or to a conveyor.

The picking tool is of a type that comprises a gripper 5 and, as shown in Fig. 2, in this case more specifically a suction cup 5 to engage the cap of a mushroom for picking that mushroom. The suction cup 5 is hereby applied on a robot arm configured to move the suction cup 5 between a pickup spot and a drop-off spot and optionally to move the suction cup to the cleaning unit 2. The suction cup comprises a wall part made 6 of a flexible polymeric material defining a central channel 7 extending in a longitudinal direction X, from a proximal end portion 8 of the suction cup to a distal end portion 9 thereof.

The proximal end portion 7 of the suction cup defines a connector configured to apply the suction cup on a shaft of the robot arm, while the distal end portion of the suction cup comprises the actual suction part of the suction cup, defined by a surface 10, preferably cone shaped, configured to engage with a mushroom cap.

In between the proximal and distal end portions, the suction cup may comprise an intermediate part wherein the wall part of suction cup comprises for example a single bellow 11 (Fig. 2), a pair of bellows in serial order, a series of bellows in serial order. Such bellow provides a damping function during contacting the suction cup with a mushroom cap and reduces the risk of damaging the mushroom cap at engagement. It is believed that a suction cup comprising a single bellow in it's intermediate part offers a good dampening function without making the suction cup unnecessarily bulky. In case the intermediate part of the suction cup comprises one or more bellows as described supra, the bellow situated closest to the distal part comprises a root section 12 at the interface of the bellow and the distal part of the suction cup, said root section having an inner diameter d₁.

The channel 7 of the suction cup is in fluid connection with a vacuum system for example by a tube or channel integrated in the shaft of the robot arm or by a separate tube. The vacuum system allowing to create an under-pressure in the central channel in view of atmospheric pressure.

The aforementioned engaging surface 10 is preferably dimensioned in view of the type of mushrooms it is to pick, in the sense that its diameter, measured at the free end of the engaging surface has a diameter ranging from 1 to 12 cm, with the smaller dimensions being suited for mushrooms with small caps of between 1 to 3 cm and the larger dimensions of suction caps being suited for larger mushrooms such as Portobellos.

Optionally, the picking tool comprises means for rotating the suction cup around its longitudinal axis.

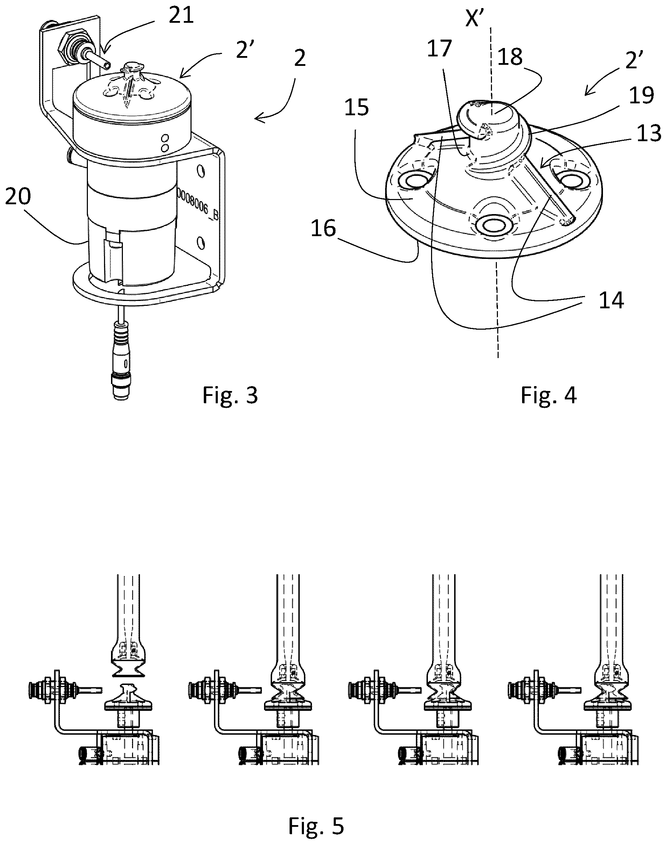

According to the present invention and as shown in Fig. 3, the cleaning unit 2 comprises a cleaning tool 2', shown in more detail in Fig. 4, comprising a blade 13 defining a scraping edge 14. In this case the cleaning tool 2' has a cone shaped body 15 with a base 16 and an apex 17, spaced apart in an X'-direction, whereby one or more blades 13 protrude from the body, defining the scraping edge 14 that in this case extends from base to apex. From the apex 17, a rod 18 extends in the X'-direction with a spiral blade 19 protruding from said rod.

Alternatively, the gripper can be of a different design, even without a through channel for applying a vacuum. An example of such alternative gripper is disclosed in for example WO2016146140, incorporated herein by reference.

The outer diameter of the spiral blade 19 (measured perpendicular to the X'-direction) at the top of the cone is preferably substantially equal to the diameter d1 of the root section 12 of the suction cup 5 in case this comprises a bellow or of the corresponding root section at the interface of the distal part and the proximal part of the suction cup 5.

The cleaning tool 2' is preferably engaged on a rotating axis coupled of the cleaning unit, which axis is coupled to a motor 20 allowing rotating the axis around its longitudinal axis parallel to and off-set or coinciding with the longitudinal centerline X' of the cone.

The cleaning unit 2 may comprise a fluid jet nozzle 21 positioned in proximity of the blade and directed thereto for directing an impinging fluid stream on the blade. The fluid can either be a gas (gas jet nozzle) or a liquid (liquid jet nozzle), such as a water jet nozzle.

The cleaning unit 2, in particular the tool 15 thereof is positioned within reach of the picking tool, such that the suction cup an in particular the engaging surface 10 thereof can engage with the scraping edge 14 of the cleaning unit 2.

The above-described mushroom picking system allow picking mushrooms according to a metho of the present invention. Said method comprises the steps of:
(a) Executing a picking cycle comprising:
   i. Engaging the gripper of the picking tool with a mushroom cap at a pick-up spot;
   ii. Applying a partial vacuum between the gripper and the mushroom cap;
   iii. Releasing the concerned mushroom from the gripper at a drop-off spot;
(b) Repeating said picking cycle (a) for a different mushroom;
(c) Periodically cleaning the suction cup at a cleaning unit in between two subsequent picking cycles.

The pick-up spot can hereby be the conveyor 3 by which mushrooms are being transported to the picking system as shown in Fig. 1, but can also be a package wherein mushrooms are present or any other type of holding means for mushrooms.

The drop-off spot may be the packaging unit shown in Fig. 1 but may also be another type of holding means for mushrooms.

The vacuum system is preferably controlled by a controller that also controls the operating of the robot arm of the picking tool, such that the pick-up and release or drop-off of mushrooms is synced with the movement of the robot arm. Such controllers are well known in the area of robotics and will not be described in further detail in this specification.

During pick-up and release of mushrooms, scales tend to stick to and potentially accumulate on the engaging surface of the gripper. These scales can prevent a good engaging contact of the gripper with a mushroom cap and hence result in air being sucked into the space between mushroom cap and gripper when applying a partial vacuum, rendering the pick-up of mushrooms less efficient and effective. To limit or prevent this loss in effectiveness, without unduly increasing the partial vacuum and thus the pressure of the gripper on the mushroom cap, the method of the present invention comprises a periodical cleaning of engaging surface of the gripper.

Periodically is hereby defines as either on fixed intervals, meaning after having performed a predetermined amount of picking cycles (for example after each 1, 2, 3, 4, 5, 6, ... picking cycles) or at a time triggered by a measured value such as for example when the application of the partial vacuum requires a stronger air suction by the vacuum system.

The cleaning cycle is performed between two subsequent picking cycles by moving the suction cup 5 by the robot arm it is applied to, to the cleaning unit 2. The gripper 5 is thus cleaned while engaged on the robot arm of the picking tool.

The cleaning of the gripper is performed by engaging the engaging surface of the gripper with the scraping edge of the cleaning unit and by rotating the suction cup in view of the scraping edge while both are engaged with one another.

As shown in Fig. 5, in order to clean the suction cup 5, the suction cup is brought in contact with the scraping edge 13 of the cleaning tool by with the longitudinal direction X of the suction cup parallel to the X'-axis of the cleaning tool 2' or at an angle thereto, the angle ranging between 0° and 80°. The scraping edge 13 is hereby oriented somewhat tangential to the engaging surface 10 of the suction cup allowing effectively removing scales or other particles adhering to the engaging surface.

In the shown embodiment, the rod 18 with spiral blade 19 of the cleaning tool enters into the channel 7 of the suction cup and engages with the suction cup wall part next to the root section in the most distal bellow 11 of the suction cup, allowing removing scales migrating into the channel 7.

When in engaging contact, the X-axis of the suction cup and the X'-axis of the cleaning tool may coincide or the suction cup can be translated versus the cleaning tool in a Y-direction perpendicular to the X-direction.

In case the scraping edge is curved along a spiral convoluting around a X'-axis, the rotation of the scraping tool versus the suction cup is preferably such as to force scales out of the suction cup, it is towards it's distal end along the blade of the cleaning tool.

The cleaning of the suction cup is preferably performed in a sequence of steps that together can be addresses as a cleaning cycle as shown in Fig. 5, these steps comprising:
(a) positioning the suction cup with its longitudinal direction X co-axial to the longitudinal X'-axis of the cleaning unit or at an angle in view of the X-axis, against the blade in an initial position;
(b) rotating the suction cup in view of the cleaning unit while exerting a pressure on the blade towards the suction cup or vice versa;
(c) translating the suction cup in view of the cleaning unit in a direction perpendicular to the X-axis of the suction cup;
(d) rotating the suction cup in view of the cleaning around while exerting a pressure on the blade towards the suction cup or vice versa.

Optionally steps (c) (=translating suction cup in view of cleaning unit) and (d) (=rotating the suction cup in view of the cleaning unit) can be repeated several times.

Optionally, the cleaning tool and in particular the blade of the cleaning tool can be cleaned between two cleaning cycles by directing an impinging fluid jet, preferably an air jet or water jet on the blade.

By dimensioning the cleaning tool such that the outer diameter of the blade (measured perpendicular to the Y-direction) at the top of the cone, smaller than the diameter d1 of the root section 12 of the suction cup 5 in case this comprises a bellow or of the corresponding root section at the interface of the distal part and the proximal part of the suction cup 5, the scraping edge can effectively clean the entire engaging surface of the suction cup, offering a highly effective mushroom picking system in accordance with the present invention.

## Claims

1. A mushroom picking system comprising:
(a) a picking tool comprising a gripper for engaging a mushroom cap;
(b) a cleaning unit for periodically cleaning the gripper,
wherein the gripper comprises a wall part made of a flexible polymeric material defining a surface for engaging a mushroom cap, **characterized in that** the cleaning unit comprises a blade defining a scraping edge configured to engage with said engaging surface of the gripper.

2. The mushroom picking system according to claim 1, wherein the gripper is a suction cup with a proximal end defining a connector for connection of the suction cup to a shaft of the picking tool, and a distal end defining said engaging surface of the suction cup.

3. The mushroom picking system according to claim 2, the suction cup defining a central channel extending in a longitudinal X-direction from the proximal end to the distal end of the suction cup, the suction cup preferably comprising a bellow defined by the wall part of the suction cup and situated between the proximal end and the distal end thereof.

4. The mushroom picking system according to any of the preceding claims, the picking tool comprising means for rotating the suction cup around the longitudinal direction X.

5. The mushroom picking system according to any of the preceding claims, said cleaning unit comprising a cone shaped body with a base and an apex, spaced apart in a direction X', whereby one or more blades protrude from the body, each defining a scraping edge extending in a direction from the base towards the apex.

6. The mushroom picking system according to claim 5, the cleaning unit comprising a rod extending in the X' direction from the apex of the cone shaped body, and a spiral blade protruding axially from said rod.

7. The mushroom picking system according to claim 4, wherein the outer diameter of the blade measured perpendicular to the axis X' is substantially equal the inner diameter of the suction cup at it's distal end, preferably substantially equal to the inner diameter of a root section of the bellow positioned closest to the distal end portion of the suction cup.

8. The mushroom picking system according to claim 5, 6 or 7, comprising means for rotating said blade around said central longitudinal axis X'.

9. The mushroom picking system according to any of the preceding claims, comprising a fluid jet nozzle directed to the blade of the cleaning unit, said fluid jet nozzle preferably selected from a gas jet nozzle such as an air jet nozzle or a liquid jet nozzle such as a water jet nozzle.

10. A method for picking mushrooms, said method comprising the steps of:
(d) Executing a picking cycle comprising:
iv. Engaging a gripper of a picking tool with a mushroom cap at a pick-up spot;
v. Applying a partial vacuum between the gripper and the mushroom cap;
vi. Releasing the concerned mushroom from the gripper at a drop-off spot;
(e) Repeating said picking cycle (a) for a different mushroom;
(f) Periodically cleaning the gripper at a cleaning unit in between two subsequent picking cycles, wherein the gripper comprises a wall part made of a flexible polymeric material defining a surface for engaging a mushroom cap, **characterized in that** the cleaning unit comprises a blade defining a scraping edge configured to engage with said engaging surface of the gripper.

11. The method according to claim 10, comprising rotating the gripper in view of the scraping edge of the blade while the scraping edge contacts the suction cup.

12. The method according to claim 10, wherein said gripper is a suction cup with a proximal end defining a connector for connection of the suction cup to a shaft of the picking tool, and a distal end defining said engaging surface of the suction cup and with a central channel extending in a longitudinal X-direction from the proximal end to the distal end of said suction cup, the suction cup preferably comprising a bellow defined by the wall part of the suction cup and situated between the proximal end and the distal end thereof, and wherein said cleaning unit comprising a cone shaped body with a base and an apex, spaced apart in a direction X', whereby one or more blades protrude from the body, each defining a scraping edge extending in a direction from the base towards the apex, said method comprising the steps of:
(a) positioning the suction cup with its longitudinal direction X co-axial to the longitudinal X'-axis of the cleaning unit or at an angle in view of the X-axis, against the blade in an initial position;
(b) rotating the suction cup in view of the cleaning unit while exerting a pressure on the blade towards the suction cup or vice versa;
(c) translating the suction cup in view of the cleaning unit in a direction perpendicular to the X-axis of the suction cup;
(d) rotating the suction cup in view of the cleaning around while exerting a pressure on the blade towards the suction cup or vice versa.

13. The method according to any of claims 10 to 12, wherein the cleaning unit is cleaned subsequent to cleaning a suction cup.

14. The method according to claim 13, wherein the cleaning unit is cleaned by an impinging fluid jet.

15. Use of a system as identified in any of claims 1-9 for picking mushrooms.
